# EUROPÄISCHE PATENTSCHRIFT

(11) **EP 0 817 732 B1**
(45) Veröffentlichungstag und Bekanntmachung des Hinweises auf die Patenterteilung: **09.10.2002**
(21) Anmeldenummer: 97914103.3
(22) Anmeldetag: 26.01.1997
(51) Int. Cl.: B60N 2/48

(54) **VORRICHTUNG ZUR VERMEIDUNG ODER EINSCHRÄNKUNG DES KIPPENS DES KOPFES**
DEVICE FOR PREVENTING OR REDUCING TIPPING OF THE HEAD
DISPOSITIF POUR EMPECHER OU LIMITER L'INCLINAISON DE LA TETE

(30) Priorität: 27.01.1996 DE 19602939
(43) Veröffentlichungstag der Anmeldung: 14.01.1998
(73) Patentinhaber: Semsch, Angelika, 86163 Augsburg (DE); Schneider, Elisabeth, 89250 Senden (DE)
(72) Erfinder: Semsch, Angelika, 86163 Augsburg (DE); Schneider, Elisabeth, 89250 Senden (DE)
(74) Vertreter: Jannig, Peter, Dipl.-Ing.
(86) Internationale Anmeldenummer: DE9700187
(87) Internationale Veröffentlichungsnummer: WO97027076

(56) Entgegenhaltungen:
- DE-A- 3 023 140
- DE-A- 4 033 848
- US-A- 3 951 453
- US-A- 4 707 031
- US-A- 4 725 253
- US-A- 5 205 611
- US-A- 5 330 255

## Beschreibung

Die vorliegende Erfindung betrifft eine Vorrichtung gemäß dem Oberbegriff des Patentanspruchs 1, d.h. eine Vorrichtung zur Vermeidung oder Einschränkung des Kippens des Kopfes eines in einer eine Rückenlehne aufweisenden Sitzgelegenheit Sitzenden nach vorne und/oder zur Seite, mit mindestens einem ein- oder mehrteiligen, aus einem oder mehreren kissenartigen Elementen bestehenden Kopfstützelement, wobei das eine oder die mehreren kissenartigen Elemente derart ausgebildet und bemessen sind, daß sie im bestimmungsgemäß angelegten Zustand auf den Schultern und/oder dem Brustbereich des Sitzenden liegend die seitlichen und vorderen Abschnitte des Halses und/oder des Kopfes des Sitzenden vollständig umgeben können, und wobei vom Kopfstützelement ein zum Halten des Kopfstützelements in dessen bestimmungsgemäßer Lage vorgesehener ein- oder mehrteiliger Verbindungsabschnitt abgeht.

Es ist bekannt, daß der Kopf eines Sitzenden insbesondere dann, wenn der Sitzende schläft, leicht nach vorne und/oder zur Seite kippt bzw. fällt.

Dies ist eine unangenehme Position, die den Schlaf beeinträchtigen und schmerzhafte Verspannungen der Hals- und Nackenmuskulatur verursachen kann.

Im übrigen öffnet sich in solchen Situationen häufig auch der Mund des Schlafenden, so daß aus diesem Speichel auslaufen kann, was wiederum den unangenehmen Effekt hat, daß die Kleidung des Schlafenden in Mitleidenschaft gezogen wird.

Wenn die Sitzgelegenheit ein Sitz oder ein Kindersitz in einem Auto oder dergleichen ist, besteht ferner die Gefahr, daß der frei nach vorn oder zur Seite hängende Kopf des Schlafenden bei einem Unfall ungebremst umhergeschleudert wird, was sehr schnell zu ernsthaften Verletzungen wie Schleudertraumata und dergleichen führen kann.

Eine Vorrichtung, durch die das Kippen des Kopfes eines Sitzenden verhindert werden soll, ist aus der DE 94 18 878 U1 bekannt.

Die bekannte Vorrichtung ist eine kopfstützenartige Anordnung, die durch Schraubzwingen oder dergleichen an Rückenlehnen von Sitzgelegenheiten montierbar ist. Sie besteht im wesentlichen aus einer flexiblen Rückwand und zwei seitlichen Polstern. An den seitlichen Polstern sind Klettverschlüsse und diverse Gummizüge angebracht, durch welche die Polster unter Einklemmen des kompletten Kopfes zwischen sich zusammengebracht und -gehalten werden können. Diese bekannte Vorrichtung bietet erkennbar weder beim Anlegen noch beim Tragen einen hohen Komfort.

Eine weitere Vorrichtung zur Vermeidung oder Einschränkung des Kippens des Kopfes ist aus der US 5 330 255 bekannt. Die dort beschriebene Vorrichtung ist ein mit einem Fahrzeugsitz fest verankertes aufblasbares Kissen, welches beim bestimmungsgemäßen Gebrauch im wesentlichen den Nacken und die seitlichen Teile insbesondere des Halses umschließt; der vordere Teil des Halses ist weitgehend frei, um das An- und Ablegen der beschriebenen Vorrichtung zu ermöglichen. Dadurch gestaltet sich zwar die Handhabung der Vorrichtung vergleichsweise einfach, doch ist damit andererseits ein Kippen des Kopfes nach vorn nur sehr eingeschränkt verhinderbar.

Eine weitere Vorrichtung zur Vermeidung oder Einschränkung des Kippens des Kopfes ist aus der US 4 617 691 bekannt. Die dort beschriebene Vorrichtung ist ein Kissen, welches im bestimmungsgemäß angelegten Zustand den Hals vollständig umschließt, aber nur am Hals und nicht zusätzlich auch anderswo befestigbar ist und folglich nur beschränkt ein Kippen des Kopfes verhindern kann.

Der vorliegenden Erfindung liegt daher die Aufgabe zugrunde, eine komfortabel anlegbare und tragbare Vorrichtung zur zuverlässigen und sicheren Vermeidung oder Einschränkung des Kippens des Kopfes eines in einer eine Rückenlehne aufweisenden Sitzgelegenheit Sitzenden nach vorne und/oder zur Seite zu schaffen.

Diese Aufgabe wird erfindungsgemäß durch die im kennzeichnenden Teil des Patentanspruchs 1 beanspruchten Merkmale gelöst.

Demnach ist vorgesehen, daß der Verbindungsabschnitt derart ausgebildet und bemessen ist,
- daß er über die Rückenlehne der Sitzgelegenheit hinweg nach jenseits derselben führbar und/oder um oder über eine an der Sitzgelegenheit vorgesehene Kopfstütze hängbar ist, und
- daß das Führen des Verbindungsabschnittes über die Rückenlehne bzw. das Hängen des Verbindungsabschnittes um oder über die Kopfstütze durch ein Überwerfen des Verbindungsabschnittes über die Rückenlehne bzw. um oder über die Kopfstütze erfolgen kann.

Dadurch, daß das Kopfstützelement dazu ausgelegt ist, die seitlichen und vorderen Abschnitte des Halses und/oder des Kopfes des Sitzenden im bestimmungsgemäß angelegten Zustand vollständig zu umschließen, kann sowohl das Kippen des Kopfes zur Seite als auch das Kippen des Kopfes nach vorn zuverlässig verhindert werden.

Dadurch, daß das Kopfstützelement dazu ausgelegt ist, im bestimmungsgemäß angelegten Zustand auf den Schultern und/oder dem Brustbereich des Sitzenden aufzuliegen, bedarf es keiner besonders stabilen Befestigung des Kopfstützelements am Sitz oder am Sitzenden.

Durch die beanspruchte Art und Weise der Befestigung erfindungsgemäßen Vorrichtung am Sitz kann das Anlegen derselben beispielsweise einfach durch Umhängen um den Sitzenden und Überwerfen eines mit dem Kopfstützelement verbundenen, als Verbindungsabschnitt bezeichneten Teils der Vorrichtung über die Rückenlehne und/oder die Kopfstütze der Sitzgelegenheit erfolgen.

Insbesondere wenn der besagte Verbindungsabschnitt über die Rückenlehne der Sitzgelegenheit nach jenseits derselben geführt wird, erweist es sich als vorteilhaft, wenn - wie in Patentanspruch 2 beansprucht ist - der Verbindungsabschnitt mit einem Gewichtselement versehen ist, welches im hinter dem Sitzenden hängenden oder liegenden Zustand einem Verschieben des Kopfstützelements aus seiner bestimmungsgemäßen Lage entgegenwirkt.

Wird der Verbindungsabschnitt um oder über eine an der Sitzgelegenheit vorgesehene Kopfstütze gehängt, so ist es in der Regel ausreichend, wenn der Verbindungsabschnitt beispielsweise zum Aufsetzen auf die Kopfstütze geeignet ist oder als eine um die Kopfstütze legbare Schleife oder dergleichen ausgebildet ist.

Trotz dieser denkbar einfachen Anlegbarkeit der erfindungsgemäßen Vorrichtung bleibt diese dauerhaft in der ihr zugedachten Position (am Hals und/oder am Kopf des Sitzenden) und erfüllt dort zuverlässig ihre Aufgabe (Halten des Kopfes).

Es wurde mithin eine komfortabel anlegbare und tragbare Vorrichtung zur zuverlässigen und sicheren Vermeidung oder Einschränkung des Kippens des Kopfes eines in einer eine Rückenlehne aufweisenden Sitzgelegenheit Sitzenden nach vorne und/oder zur Seite geschaffen.

Vorteilhafte Weiterbildungen der Erfindung sind Gegenstand der Unteransprüche.

Die Erfindung wird nachfolgend anhand von Ausführungsbeispielen unter Bezugnahme auf die Zeichnung näher beschrieben. Es zeigen
- Figur 1: schematisch eine Draufsicht auf ein erstes Ausführungsbeispiel der erfindungsgemäßen Vorrichtung zur Vermeidung oder Einschränkung des Kippens des Kopfes eines in einer eine Rückenlehne aufweisenden Sitzgelegenheit Sitzenden nach vorne und/oder zur Seite, und
- Figur 2: schematisch eine Draufsicht auf ein zweites Ausführungsbeispiel der erfindungsgemäßen Vorrichtung.

Die Vorrichtung zur Vermeidung oder Einschränkung des Kippens des Kopfes eines in einer eine Rückenlehne aufweisenden Sitzgelegenheit Sitzenden nach vorne und/oder zur Seite wird im folgenden der Einfachheit halber kurz als Kopfkippschutz bezeichnet.

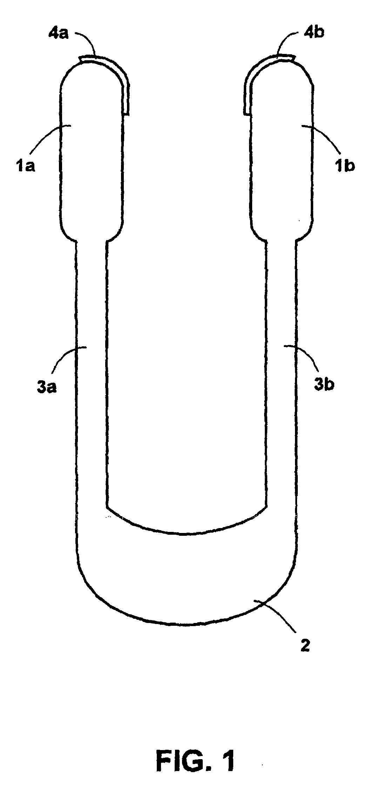

Der in der Figur 1 gezeigte Kopfkippschutz besteht aus zwei Kopfstützelementen in Form zylinderförmiger Kissen 1a, 1b, einem Gewichtselement 2 und einem die Kissen 1a, 1b mit dem Gewichtselement 2 verbindenden Verbindungsabschnitt in Form von zwei Verbindungselementen 3a, 3b.

Der Durchmesser der zylinderförmigen Kissen 1a, 1b ist jeweils so bemessen, daß er im auf eine Schulter und/oder auf dem Brustbereich eines Sitzenden aufliegenden und um den Hals und gegebenenfalls um Teile des Kopfes (im wesentlichen um den Unterkieferbereich desselben) des Sitzenden geführten Zustand ein Kippen des Kopfes in Richtung Kissen begrenzen kann. Bei kleinen und dementsprechend leichten (Kinder-) Köpfen kann es ausreichend sein, das Kissen nur entlang des Halses verlaufen zu lassen. Insbesondere bei größeren und folglich auch schwereren (Erwachsenen-)Köpfen kann es erforderlich sein, zusätzlich auch den Unterkieferbereich mit einzubeziehen.

Die Länge der Kissen 1a, 1b ist im Idealfall so bemessen, daß die sich bei einer Aneinanderreihung ergebende Gesamtlänge genau ausreicht, um die seitlichen Abschnitte und den vorderen Abschnitt des Halses und gegebenenfalls des Kopfes relativ eng anliegend vollständig zu umgeben; nach den derzeitigen Erkenntnissen läßtder angestrebte Kopfkippschutzeffekt sich hierdurch am komfortabelsten und zuverlässigsten erzielen. Die Gesamtlänge der Kissen kann jedoch auch (unter anderem in Abhängigkeit von der gewünschten Handhabung, Funktion und Wirkungsweise) größer oder kleiner sein, und die Länge der beiden Kissen 1a, 1b kann gleich oder verschieden sein.

Die Kissen 1a, 1b sind einerseits elastisch ausgebildet, damit sie zu einem mehr oder weniger engen Anschmiegen um seitliche und vordere Hals- und gegebenenfalls Kopfabschnitte verformbar sind und damit ein Abstützen des Kopfes durch dieselben als angenehm empfunden wird. Andererseits weisen sie aber auch eine gewisse Mindeststeifigkeit auf, um den zum Kippen neigenden Kopf zuverlässig in seiner bestimmungsgemäßen (nicht gekippten) Stellung halten zu können.

Die Kissen 1a, 1b weisen an den einander zugewandten Seiten sowie an deren freien Enden Verbindungsvorrichtungen in Form von Klettverschlußelementen 4a, 4b auf. Die Klettverschlußelemente sind derart ausgebildet, daß die beiden Kissen 1a, 1b durch Zusammenbringen der Klettverschlußelemente zu einem einzigen zusammenhängenden Kissen verbindbar sind. Der Ort und die Art einer derartigen Verbindung innerhalb der Kissenkombination ist durch die Länge der Kissen 1a, 1b sowie die Position und die Größe der Klettverschlußelemente 4a, 4b festlegbar; eine gezielte Veränderung derselben ermöglicht eine Veränderung (individuelle Anpassung) der Handhabbarkeit, der Wirksamkeit, und des Tragekomforts des Kopfkippschutzes sowie der Festigkeit der Verbindung.

Anstatt der Klettverschlußelemente 4a, 4b oder zusätzlich zu diesen können auch beliebige andere Verbindungsvorrichtungen wie beispielsweise sich anziehende Magnete, Druckknöpfe, normale Knöpfe und dergleichen verwendet werden.

Im Inneren der Kissen 1a, 1b kann ein zwar verformbarer, aber im wesentlichen nicht elastischer Kern vorgesehen sein, der unter Kraftaufwand dauerhaft (bis zur nächsten Kraftausübung) verformbar ist. Um bei Unfällen und dergleichen die Verletzungsgefahr durch einen derart ausgebildeten Kern gering zu halten, sollte dieser relativ leicht verformbar sein. Durch Vorsehen eines solchen Kerns ist es möglich, die Kissenform dauerhaft an jeweilige Hals- und/oder Kopfformen anzupassen.

Die Kissen 1a, 1b sind vorzugsweise mit einem abnehmbaren und waschbaren Bezug bezogen. Die Klettverschlußelemente 4a, 4b oder andere Verbindungsvorrichtungen sind in diesem Fall auf dem Bezug vorgesehen oder werden zumindest frei zugänglich gehalten.

Die die Kissen 1a, 1b mit dem Gewichtselement 2 wie in der Figur gezeigt verbindenden Verbindungselemente 3a, 3b sind im vorliegenden Ausführungsbeispiel trägerartige Elemente aus Stoff, wobei die Kissen 1a, 1b jeweils über ein separates (immer nur einem Kissen zugeordnetes) Verbindungselement 3a, 3b mit dem gemeinsamen Gewichtselement 2 verbunden sind. Die Länge der trägerartigen Elemente bzw. allgemeiner ausgedrückt die Abmessungen der Verbindungselemente sind danach zu bemessen, an welcher Stelle die Kissen angeordnet bzw. gehalten werden sollen und/oder wie weit hinter dem Sitzenden bzw. in welcher Höhe hinter dem Sitzenden das Gewichtselement anordenbar sein soll. Hierzu kann auch ein Längenverstellmechanismus vorgesehen werden, mit Hilfe dessen die Länge der trägerartigen Elemente (die Abmessungen des Verbindungsabschnittes) individuell einstellbar sind.

Das Gewichtselement 2 wird im vorliegenden Ausführungsbeispiel durch Sand gebildet, der in eine oder mehrere Kammern eines Behältnisses aus Stoff gefüllt ist.

Anstatt Sand kann natürlich auch eine Vielzahl von anderen Materialien verwendet werden. Um die Gefahr von Verletzungen durch das Gewichtselement möglichst gering zu halten, was insbesondere bei Verwendung des Kopfkippschutzes in Fahrzeugen (bei Unfällen) sehr wichtig ist, handelt es sich bei den ersatzweise verwendbaren Materialien vorzugsweise um feinkörnige und/oder elastische und/oder keine spitzen Ecken und Kanten aufweisende Materialien.

Es besteht auch keine Einschränkung darauf, daß das Gewichtselement in einem Behältnis aus Stoff untergebracht ist. Das Behältnis kann auch aus anderem Material bestehen oder - sofern es die Konsistenz des das Gewicht bildenden Materials zuläßt - entfallen.

Das Gewichtselement kann einteilig oder mehrteilig ausgebildet sein. Für den Fall, daß es mehrteilig ausgebildet ist, kann vorgesehen werden, daß die mehreren Teile lösbar aneinander befestigbar sind. Dies kann beispielsweise durch Aneinanderhängen der Teile unter Verwendung von Knöpfen, Druckknöpfen, Klettverschlüssen, Haken und dergleichen geschehen. Eine derartige Gestaltung des Gewichtselements erlaubt es, das Gewicht des Gewichtselements optimal an die jeweiligen Gegebenheiten anpassen zu können.

Am Gewichtselement 2 kann eine Tasche ausgebildet sein, in welcher wichtige Utensilien wie beispielsweise Spielzeug, Schreibzeug, Medikamente und dergleichen aufbewahrbar bzw. mitführbar sind, was insbesondere bei Mitnahme des erfindungsgemäßen Kopfkippschutzes auf Reisen (zur Verwendung im PKW, Bus, Flugzeug, Zug, Schiff, beim Radfahren (im Kindersitz) etc.) sehr angenehm ist.

Im bestimmungsgemäß angelegten Zustand sind die mittels der Klettverschlußelemente 4a, 4b verbundenen Kissen 1a, 1b auf den Schultern und/oder dem Brustbereich des Sitzenden liegend um die seitlichen und/oder den vorderen Abschnitt dessen Halses und gegebenenfalls dessen Unterkieferbereichs angeordnet. Das Gewichtselement 2 ist hinter dem Sitzenden angeordnet. Die Verbindungselemente 3a, 3b verlaufen dabei über die Schultern und/oder eine Rückenlehne der Sitzgelegenheit, auf welcher die sitzende Person sitzt.

Sofern die Rückenlehnenkonstruktion dies erlaubt, hängt das Gewichtselement hinter derselben frei nach unten. Das Herabhängen des Gewichtselements bewirkt zweierlei. Einerseits werden die Kissen, die, wenn sie nicht als Bestandteil des erfindungsgemäßen Kopfkippschutzes verwendet würden, über kurz oder lang vom Hals abfallen würden, aktiv zum Hals hin gezogen (erste Wirkung). Andererseits werden die Verbindungselemente 3a, 3b auf die Schultern des Sitzenden und/oder die Rückenlehne der Sitzgelegenheit gedrückt, wodurch eine Gleitbewegung des Kopfkippschutzes über den Sitzenden und/oder die Sitzgelegenheit (wie sie beim Verrutschen der Kissen vom Hals auftreten würde) erheblich erschwert oder gänzlich ausgeschlossen wird (zweite Wirkung). Welche dieser Wirkungen wie stark ausgeprägt ist, hängt unter anderem von der absoluten Masse des Kopfkippschutzes, von der örtlichen Verteilung der Masse innerhalb des Kopfkippschutzes und von der Reibung zwischen dem Kopfkippschutz und dem Sitzenden und/oder der Rückenlehne ab. Um ein Würgen des Sitzenden zu verhindern, ist anzustreben, daß die erste Wirkung - vorzugsweise unter Vorsehen einer ausgeprägten zweiten Wirkung - relativ gering gehalten wird. Andererseits sollte unter Umständen - wenn dem Sitzenden ein Vorbeugen gestattet sein soll - auch die zweite Wirkung nicht übermäßig stark ausgeprägt sein.

Manche Rückenlehnenkonstruktionen erlauben es nicht, daß das Gewichtselement hinter denselben nach unten hängt. Dies kann z.B. bei den Rücksitzen eines PKW der Fall sein. In diesem Fall kann vorgesehen werden, das Gewichtselement auf einer Auflagefläche hinter der Rückenlehne (beispielsweise auf der Hutablage des PKW) abzulegen. Das Gewichtselement drückt dann auf die Auflagefläche, wodurch eine Verrutschen desselben entlang der Auflagefläche (wie sie beim Verrutschen der Kissen vom Hals auftreten müßte) erheblich erschwert oder gänzlich ausgeschlossen wird (dritte Wirkung).

Allgemein und zusammenfassend gesprochen ist anzustreben, daß das Kopfstützelement (Kissen 1a, 1b), das Gewichtselement 2 und die Verbindungselemente 3a, 3b jeweils ein derartiges Gewicht und/oder eine derartige Oberflächenbeschaffenheit aufweisen, daß sich zwischen den jeweiligen Elementen und Bereichen, mit denen diese Kontakt haben (der Kontakt muß nicht zwangsläufig in einem Aufliegen bestehen) oder beim Verrutschen des bestimmungsgemäß angelegten Kopfkippschutzes in Kontakt kommen würden, eine Reibung einstellt, die ein Verrutschen des bestimmungsgemäß angelegten Kopfkippschutzes verhindert oder wenigstens erheblich einschränkt.

Der beschriebene Kopfkippschutz ist nicht von der Neigung der Rückenlehne und/oder des Oberkörpers des Sitzenden beim Sitzen abhängig. Er ist bei aufrechter Sitzposition ebenso anwendbar wie bei nahezu liegender Sitzposition (wie es beispielsweise bei Auto-Kinder- und -Babysitzen teilweise der Fall ist).

Bei Auto-Kinder- und -Babysitzen werden die Verbindungselemente 3a, 3b über die Rückenlehne des Sitzes geführt, auf welchem der Kinder- oder Babysitz montiert ist. Dies ändert jedoch nicht daran, daß auch hier das Kopfstützelement, das Gewichtselement und/oder der das Kopfstützelement mit dem Gewichtselement verbindende Abschnitt derart ausgebildet sind, daß das Gewichtselement über mindestens eine Schulter des Sitzenden und/oder die Rückenlehne führbar und hinter dem Sitzenden anordenbar ist.

Unabhängig von der Rückenlehnenkonstruktion und der daran angepaßten Verwendung des Kopfkippschutzes erweist sich der erfindungsgemäße Kopfkippschutz gemäß dem vorstehend beschriebenen ersten Ausführungsbeispiel, obgleich er so vielfältig und einfach verwendbar ist, als äußerst zuverlässig und sicher.

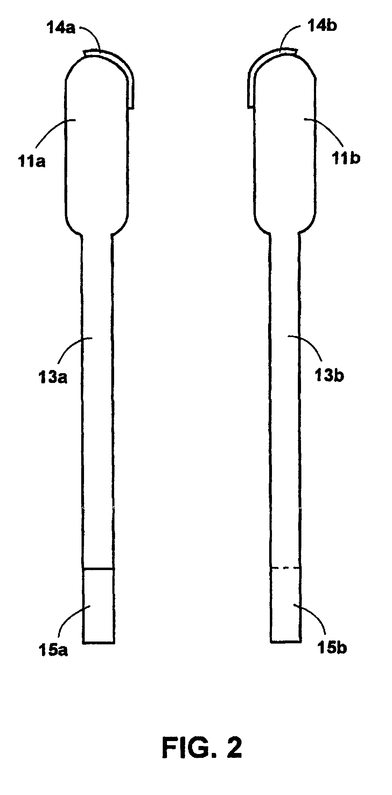

Das im folgenden unter Bezugnahme auf die Figur 2 beschriebene zweite Ausführungsbeispiel des erfindungsgemäßen Kopfkippschutzes ist dazu ausgelegt, um eine Kopfstütze eines Fahrzeugsitzes oder dergleichen gehängt zu werden.

Wie aus der Figur 2 ersichtlich ist, besteht der Kopfkippschutz gemäß dem zweiten Ausführungsbeispiel aus zwei Kopfstützelementen in Form zylinderförmiger Kissen 11a, 11b und einem von diesen abgehenden Verbindungsabschnitt in Form von zwei Verbindungselementen 13a, 13b.

Die Kissen 11a und 11b und auf diesen vorgesehene Klettverschlußelemente 14a, 14b entsprechen hinsichtlich des Aufbaus, der Funktion und der Wirkungsweise den beim ersten Ausführungsbeispiel vorgesehenen Kissen 1a, 1b und den darauf vorgesehenen Klettverschlußelementen 4a, 4b; die zu den Kissen 1a, 1b und den Klettverschlußelementen 4a, 4b gemachten Ausführungen gelten daher im vollen Umfang auch für die Kissen 11a, 11b und die Klettverschlußelemente 14a, 14b.

Die Verbindungselemente 13a und 13b entsprechen den Verbindungselementen 3a und 3b des ersten Ausführungsbeispiels. Unterschiedlich ist nur, daß beim vorliegend betrachteten zweiten Ausführungsbeispiel anders als beim zuvor erläuterten ersten Ausführungsbeispiel kein Gewichtselement an den Verbindungselementen vorgesehen ist, und daß die freien Endabschnitte der Verbindungselemente 13a, 13b mit Verbindungsvorrichtungen in Form von Klettverschlußelementen 15a, 15b versehen sind, mittels welcher sie lösbar miteinander verbindbar sind. Abgesehen von den genannten Unterschieden gelten die zu den Verbindungselementen 3a, 3b gemachten Ausführungen auch für die Verbindungselemente 13a, 13b.

Das Verbinden der Verbindungselemente 13a, 13b mittels der daran vorgesehenen Klettverschlußelemente 15a, 15b ermöglicht es, diese um eine am Sitz angebrachte Kopfstütze (beispielsweise die Kopfstütze eines Fahrzeugsitzes) zu hängen und dort zu halten.

Anstatt der Klettverschlußelemente 15a, 15b oder zusätzlich zu diesen können auch beliebige andere Verbindungsvorrichtungen wie beispielsweise sich anziehende Magnete, Druckknöpfe, normale Knöpfe und dergleichen verwendet werden.

Durch eine relativ große Ausbildung der Klettverschlußelemente können diese in unterschiedlichen Relativlagen miteinander verbunden werden, wodurch sich die wirksamen Abmessungen (die wirksame Länge) der Verbindungsabschnitte variieren lassen, was es seinerseits wiederum gestattet, die Lage, in welcher die Kissen 11a, 11b angeordnet und gehalten werden sollen, wunschgemäß individuell einzustellen.

Die Klettverschlußelemente 15a, 15b müssen sich nicht an den freien Endabschnitten gleich langer Verbindungselemente 13a, 13b befinden; sie können an beliebigen Stellen von gleich oder unterschiedlich langen Verbindungselementen 13a, 13b vorgesehen sein.

An die Klettverschlußelemente 15a, 15b oder an zusätzlich vorgesehene Klettverschlußelemente können bei Bedarf auch ein oder mehrere Gewichtselemente angehängt werden, wodurch der betrachtete Kopfkippschutz wahlweise als Kopfkippschutz gemäß dem ersten Ausführungsbeispiel oder als Kopfkippschutz gemäß dem zweiten Ausführungsbeispiel verwendet werden kann.

Die vorstehend beschriebenen Ausführungsbeispiele des erfindungsgemäßen Kopfkippschutzes weisen als Kopfstützelement jeweils zwei miteinander verbindbare Kissen auf. Das Vorsehen einer derartigen, sich unter Krafteinwirkung selbständig lösenden Verbindung von Kopfstützelement-Bestandteilen ist insbesondere beim Autofahren vorteilhaft. Falls sich nämlich bei einem Unfall der Kopf des Sitzenden zu heftig bewegt (beispielsweise weil der Sitzende nicht angeschnallt war und umhergeschleudert wird), löst sich die Verbindung zwischen den Kissen und bewahrt den Sitzenden damit vor Verletzungen durch den Kopfkippschutz.

Es besteht jedoch keine Einschränkung darauf, daß das Kissen zweiteilig ausgebildet ist. Es kann statt dessen selbstverständlich auch ein einziges Kissen vorgesehen sein, das wie die zwei Kissen 1a, 1b bzw. 11a, 11b die seitlichen und vorderen Teile des Halses und gegebenenfalls des Unterkieferbereiches des Kopfes des Sitzenden komplett umgibt. Auch in diesem Fall sollte jedoch zumindest bei Verwendung des Kopfkippschutzes in Fahrzeugen berücksichtigt werden, daß der Kopf des Sitzenden bei zu heftiger Bewegung automatisch freigebbar sein muß. Dies kann beispielsweise dadurch bewerkstelligt werden, daß das besagte einzige Kissen zumindest teilweise lösbar mit dem Verbindungsabschnitt 3a, 3b bzw. 13a, 13b verbunden ist (z.B. durch einen Klettverschluß). Auf eine solche lösbare Verbindung zwischen dem Kissen und dem Verbindungsabschnitt kann unter Umständen verzichtet werden, wenn wie beispielsweise beim zweiten Ausführungsbeispiel der Verbindungsabschnitt und/oder das Gewichtselement Verbindungen aufweisen, welche sich in Gefahrensituationen selbständig lösen und dadurch den Kopf des Sitzenden freigeben.

Es besteht auch keine Einschränkung darauf, daß der Verbindungsabschnitt 3a, 3b bzw. 13a, 13b jeweils aus zwei trägerartigen Elementen besteht. Selbstverständlich kommen auch nicht trägerartige Elemente und/oder zu einer zusammenhängenden Einheit verbundene (einstückig ausgebildete) Verbindungselemente zur Verwendung als Verbindungsabschnitt in Frage.

Bei den vorstehend beschriebenen Ausführungsbeispielen sind sämtliche Bestandteile des Kopfkippschutzes aus Stoff hergestellt oder zumindest mit Stoff bezogen. Auch hierauf besteht keine Einschränkung. Es können beliebige andere Materialien verwendet werden, wobei jedoch insbesondere zu beachten ist, daß sich zwischen den Kopfkippschutz-Bestandteilen und den Schultern und/oder dem Brustbereich des Sitzenden und/oder der Rückenlehne der Sitzgelegenheit eine Reibung einstellt, die die bestimmungsgemäße Funktion des Kopfkippschutzes gewährleisten kann.

Beim eingangs beschriebenen ersten Ausführungsbeispiel des erfindungsgemäßen Kopfkippschutzes ist das Gewichtselement 2 ein für alle Verbindungselemente 3a, 3b gemeinsames Gewichtselement. Auch hierauf besteht keine Einschränkung. Es können statt dessen auch mehrere voneinander unabhängige Gewichtsteilelemente vorgesehen werden (beispielsweise ein Gewichtsteilelement pro Verbindungselement 3a, 3b). Diese mehreren Gewichtsteilelemente können dauerhaft getrennt bleiben oder ähnlich wie die Kissen 1a, 1b bzw. 11a, 11b durch eine Verbindungsvorrichtung lösbar verbindbar ausgebildet sein.

Zusammenfassend kann abschließend festgestellt werden, daß mit den beschriebenen Kopfkippschutz-Ausführungen komfortabel anlegbare und tragbare Vorrichtungen zur zuverlässigen und sicheren Vermeidung oder Einschränkung des Kippens des Kopfes eines in einer eine Rückenlehne aufweisenden Sitzgelegenheit Sitzenden nach vorne und/oder zur Seite gefunden wurden.

### Bezugszeichenliste

- 1a: Kissen
- 1b: Kissen
- 2: Gewichtselement
- 3a: Verbindungselement
- 3b: Verbindungselement
- 4a: Klettverschlußelement
- 4b: Klettverschlußelement

- 11a: Kissen
- 11b: Kissen
- 13a: Verbindungselement
- 13b: Verbindungselement
- 14a: Klettverschlußelement
- 14b: Klettverschlußelement
- 15a: Klettverschlußelement
- 15b: Klettverschlußelement

## Patentansprüche

1. Vorrichtung zur Vermeidung oder Einschränkung des Kippens des Kopfes eines in einer eine Rückenlehne aufweisenden Sitzgelegenheit Sitzenden nach vorne und/oder zur Seite, mit mindestens einem ein- oder mehrteiligen, aus einem oder mehreren kissenartigen Elementen (1a, 1b; 11a, 11b) bestehenden Kopfstützelement, wobei das eine oder die mehreren kissenartigen Elemente derart ausgebildet und bemessen sind, daß sie im bestimmungsgemäß angelegten Zustand auf den Schultern und/oder dem Brustbereich des Sitzenden liegend die seitlichen und vorderen Abschnitte des Halses und/oder des Kopfes des Sitzenden vollständig umgeben können, und wobei vom Kopfstützelement (1a, 1b; 11a, 11b) ein zum Halten des Kopfstützelements in dessen bestimmungsgemäßer Lage vorgesehener einoder mehrteiliger Verbindungsabschnitt (3a, 3b; 13a, 13b) abgeht,
**dadurch gekennzeichnet,**
**daß** der Verbindungsabschnitt derart ausgebildet und bemessen ist,
- **daß** er über die Rückenlehne der Sitzgelegenheit hinweg nach jenseits derselben führbar und/oder um oder über eine an der Sitzgelegenheit vorgesehene Kopfstütze hängbar ist, und
- **daß** das Führen des Verbindungsabschnittes über die Rückenlehne bzw. das Hängen des Verbindungsabschnittes um oder über die Kopfstütze durch ein Überwerfen des Verbindungsabschnittes über die Rückenlehne bzw. um oder über die Kopfstütze erfolgen kann.

2. Vorrichtung nach Anspruch 1,
**dadurch gekennzeichnet,**
**daß** das Kopfstützelement (1a, 1b; 11a, 11b) über den Verbindungsabschnitt (3a, 3b; 13a, 13b) mit mindestens einem Gewichtselement (2) verbunden ist, wobei das Kopfstützelement, der Verbindungsabschnitt und/oder das Gewichtselement derart ausgebildet sind, daß das Gewichtselement hinter dem Sitzenden zu hängen oder liegen kommen kann.

3. Vorrichtung nach Anspruch 2,
**dadurch gekennzeichnet,**
**daß** das Gewichtselement (2) im wesentlichen durch Sand gebildet ist, der in eine oder mehrere Kammern eingefüllt ist.

4. Vorrichtung nach einem der vorhergehenden Ansprüche,
**dadurch gekennzeichnet,**
**daß** das Kopfstützelement durch zwei längliche Form aufweisende kissenartige Elemente (1b, 1b; 11a, 11b) gebildet wird.

5. Vorrichtung nach einem der vorhergehenden Ansprüche,
**dadurch gekennzeichnet,**
**daß** das oder die das Kopfstützelement bildenden kissenartigen Elemente (1a, 1b; 11a, 11b) Verbindungsvorrichtungen (4a, 4b; 14a, 14b) aufweisen, die eine lösbare Verbindung der kissenartigen Elemente aneinander und/oder eine lösbare Verbindung mit dem Verbindungsabschnitt (3a, 3b; 13a, 13b) und/oder dem Gewichtselement (2) ermöglichen.

6. Vorrichtung nach einem der vorhergehenden Ansprüche,
**dadurch gekennzeichnet,**
**daß** der Verbindungsabschnitt (3a, 3b; 13a, 13b) durch zwei flexible trägerartige Elemente gebildet wird.

7. Vorrichtung nach einem der vorhergehenden Ansprüche,
**dadurch gekennzeichnet,**
**daß** der Verbindungsabschnitt (3a, 3b; 13a, 13b) Verbindungsvorrichtungen (15a, 15b) aufweist, die eine lösbare Verbindung von Verbindungsabschnittsteilen aneinander und/oder eine lösbare Verbindung mit dem Kopfstützelement (1a, 1b; 11a, 11b) und/oder dem Gewichtselement (2) ermöglichen.

8. Vorrichtung nach einem der vorhergehenden Ansprüche,
**dadurch gekennzeichnet,**
**daß** der Verbindungsabschnitt (3a, 3b; 13a, 13b) durch einen Verstellmechanismus oder variable Verbindungsmöglichkeiten in seinen wirksamen Abmessungen variierbar ist.

## Claims

1. Device for avoiding or limiting the tilting of the head forwards and/or to the side of a passenger sitting in a seat which has a backrest, having at least one one-piece or multi-piece head-support element which comprises one or more cushion-like elements (1a, 1b; 11a, 11b), where the one or more cushion-like elements are designed and dimensioned such that, in the position worn as intended, they are able to completely surround the side and front sections of the neck and/or of the head of the passenger, resting on the shoulders and/or the chest region of the passenger, and where the head-support element (1a, 1b; 11a, 11b) continues into a one-piece or multi-piece connecting section (3a, 3b; 13a, 13b), which is provided to hold the head-support element in its intended use position, **characterized in that** the connecting section is designed and dimensioned such
- that it can be guided over and beyond the backrest of the seat and/or can be suspended around or over a headrest which is provided for the seat, and
- that the connection section can be guided via the backrest or the suspension of the connecting section around or above the headrest by throwing the connecting section over the backrest or around or over the headrest.

2. Device according to Claim 1, **characterized in that** the head-support element (1a, 1b; 11a, 11b) is connected via the connecting section (3a, 3b; 13a, 13b) to at least one weight element (2), the head-support element, the connecting section and/or the weight element being designed such that the weight element can come to rest or hang behind the passenger.

3. Device according to Claim 2, **characterized in that** the weight element (2) is essentially formed by sand which is filled into one or more chambers.

4. Device according to one of the preceding claims, **characterized in that** the head-support element is formed by two cushion-like elements (1a, 1b; 11a, 11b) which are of elongate shape.

5. Device according to one of the preceding claims, **characterized in that** the cushion-like element or elements (1a, 1b; 11a, 11b) forming the head-support element have connecting devices (4a, 4b; 14a, 14b) which permit a releasable connection of the cushion-like elements to one another and/or a releasable connection to the connecting section (3a, 3b; 13a, 13b) and/or to the weight element (2).

6. Device according to one of the preceding claims, **characterized in that** the connecting section (3a, 3b; 13a, 13b) is formed by two flexible, support-like elements.

7. Device according to one of the preceding claims, **characterized in that** the connecting section (3a, 3b; 13a, 13b) has connecting devices (15a, 15b), which permit a releasable connection of parts of connecting sections to one another and/or a releasable connection to the head-support element (1a, 1b; 11a, 11b) and/or to the weight element (2).

8. Device according to one of the preceding claims, **characterized in that** the effective dimensions of the connecting section (3a, 3b; 13a, 13b) can be varied by means of an adjustment mechanism or variable connection means.

## Revendications

1. Dispositif pour empêcher ou limiter l'inclinaison de la tête d'un occupant d'un siège présentant un dossier vers l'avant et/ou vers le côté, comprenant au moins un élément de support de tête en une ou plusieurs parties, se composant d'un ou de plusieurs éléments de type coussin (1a, 1b ; 11a, 11b), l'un ou les plusieurs éléments de type coussin étant réalisés et dimensionnés de telle sorte qu'ils puissent entourer complètement, dans l'état appliqué conformément aux prescriptions, en s'appuyant sur les épaules et/ou la partie de la poitrine de l'occupant, les portions latérales et avant du cou et/ou de la tête de l'occupant, et une portion de liaison en une ou plusieurs parties (3a, 3b ; 13a, 13b), prévue pour maintenir l'élément de support de tête dans sa position conforme aux prescriptions, partant de l'élément de support de tête (1a, 1b ; 11a, 11b),
**caractérisé en ce que**
la portion de liaison est réalisée et dimensionnée de telle sorte
- qu'elle puisse être guidée vers l'avant par-dessus le dossier du siège de chaque côté de celui-ci et/ou qu'elle puisse être suspendue autour ou par-dessus un appuie-tête prévu sur le siège, et
- que le guidage de la portion de liaison puisse s'effectuer par-dessus le dossier ou que la suspension de la portion de liaison puisse s'effectuer autour ou par-dessus l'appuie-tête en faisant passer la portion de liaison par-dessus le dossier ou autour de ou par-dessus l'appuie-tête.

2. Dispositif selon la revendication 1,
**caractérisé en ce que**
l'élément de support de tête (1a, 1b ; 11a, 11b) est connecté par le biais de la portion de liaison (3a, 3b; 13a, 13b) à au moins un élément de poids (2), l'élément de support de tête, la portion de liaison et/ou l'élément de poids étant réalisés de telle sorte que l'élément de poids puisse venir se suspendre ou s'appliquer derrière l'occupant.

3. Dispositif selon la revendication 2,
**caractérisé en ce que**
l'élément de poids (2) est essentiellement formé par du sable qui remplit un ou plusieurs compartiments.

4. Dispositif selon l'une quelconque des revendications précédentes,
**caractérisé en ce que**
l'élément de support de tête est formé par deux éléments (1a, 1b ; 11a, 11b) de type coussin présentant une forme allongée.

5. Dispositif selon l'une quelconque des revendications précédentes,
**caractérisé en ce que**
le ou les éléments de type coussin (1a 1b ; 11a, 11b) formant l'élément de support de tête présentent des dispositifs de liaison (4a, 4b ; 14a, 14b) qui permettent une liaison détachable des éléments de type coussin les uns aux autres et/ou une liaison détachable avec la portion de liaison (3a, 3b ; 13a, 13b) et/ou avec l'élément de poids (2).

6. Dispositif selon l'une quelconque des revendications précédentes,
**caractérisé en ce que**
la portion de liaison (3a, 3b ; 13a, 13b) est formée par deux éléments flexibles de type support.

7. Dispositif selon l'une quelconque des revendications précédentes,
**caractérisé en ce que**
la portion de liaison (3a, 3b ; 13a, 13b) présente des dispositifs de liaison (15a, 15b) qui permettent une liaison détachable de parties de la portion de liaison les unes aux autres et/ou une liaison détachable avec l'élément de support de tête (1a, 1b ; 11a, 11b) et/ou avec l'élément de poids (2).

8. Dispositif selon l'une quelconque des revendications précédentes,
**caractérisé en ce que**
les dimensions effectives de la portion de liaison (3a, 3b ; 13a, 13b) peuvent être modifiées par un mécanisme de réglage ou par des possibilités de liaison variables.
